# EUROPEAN PATENT APPLICATION

(11) **EP 2 060 191 A1**
(43) Date of publication of application: **20.05.2009**
(21) Application number: 07120904.3
(22) Date of filing: 16.11.2007
(51) Int. Cl.: A23L 1/168, F26B 3/08

(54) **Rice-based food compositions and process for their preparation**

(71) Applicant: Bühler AG, 9240 Uzwil (CH)
(72) Inventor: Spörndli, Ceacilia, 8005 Zürich (CH); Meyer, Markus, Dr., 9322 Egnach (CH); Zamprogna, Eliana, 9244 Niederuzwil (CH)

(57) **Abstract**

A process for manufacturing rice-based food articles, comprising the steps of:
(A) comminuting rice and/or broken rice to obtain a comminuted rice-based material;
(B) hydrothermally-mechanically treating the comminuted rice-based material until a rice-based matrix material is obtained by at least partial gelatinization of the comminuted rice-based material; (C) forming the at least partially gelatinized rice-based matrix material by pressing and portioning in order to obtain rice-based food articles; and (D) drying the rice-based food articles. The drying step (D) comprises a water removal phase (WR) where water is removed from the food articles; and a water homogenization phase (WH) where the water concentration within the food articles is homogenized.

## Description

The present invention relates to rice-based food articles and processes for their preparation.

A known process for manufacturing rice-based food articles comprises the steps of:
(A) comminuting rice and/or broken rice to obtain a comminuted rice-based material;
(B) hydrothermally-mechanically treating the comminuted rice-based material until a rice-based matrix material is obtained by at least partial gelatinization of the comminuted rice-based material;
(C) forming the at least partially gelatinized rice-based matrix material by pressing and portioning in order to obtain rice-based food articles; and
(D) drying the rice-based food articles to obtain the final product.

A hydrothermal-mechanical treatment that may be used in step (B) is described in WO 2005/053433.

Drying of the rice-based food articles in step (C) may lead to cracks in the final product. In addition, the final product may shrink and become deformed. These defects are due to stresses in the final product primarily built up during the drying step.

Therefore, it is an object of the present invention to provide a process for preparing rice-based food articles and which prevents these stress-related defects in the final product.

This object is achieved by improving the above known process such that the drying step (D) comprises:
➢ a water removal phase (WR) where water is removed from the food articles; and
➢ a water homogenization phase (WH) where the water concentration within the food articles is homogenized.

For any given temperature of the rice-based food article during the drying step there is a transition of its material properties from a rubbery state to a glassy state when the water content of the material is gradually lowered during the drying step. Typically, during the drying process, there is a moisture gradient between the innermost regions of the rice-based food article and its surface. As a result, the outer regions close to the surface of the food article are in a glassy state while the inner regions of the food article are in a rubbery state.

The idea of providing a water homogenization phase during the drying process, i.e. causing the moisture gradient in the rice-based food article to be flattened, results in similar material properties throughout most of the food article volume. In particular, most of the material volume or even all of it remains in the rubbery state throughout most of or during the entire drying process. Thus, stress build-up within the rice-based food articles during the drying process is reduced. As a result, rice-based food articles without any cracks or hardly any cracks and with neither any deformation nor any shrinkage can be obtained. Besides, small bubbles that might have formed in step (C) can be eliminated through releasing the air while the product is in a rubbery state. Such water homogenization will also be referred to as "tempering" in this text.

Preferably, the drying step comprises a first water removal phase (WR1); a second water removal phase (WR2); and a water homogenization phase (WH1) between said first and second water removal phases (WR1 and WR2). The homogenization or tempering phase (WH1) not only causes a flattening of the water concentration gradient in the food article, but also reduces the difference between the initial and final water concentrations ("moisture gap") for each drying phase, i.e. each drying phase involves a much smaller moisture gap than a drying step (D) involving only one single uninterrupted drying phase. As a result, each water removal phase (WR1 and WR2) causes less material stress in the product during the overall drying step (D).

More preferably, the process comprises a first water homogenization phase (WH1) between said first and second water removal phases (WR1 and WR2); and a second water homogenization phase (WH2) after said second water removal phase (WR2). Again, this contributes to eliminating "dangerously dry" regions in the product prone to undergo transition from the rubbery to the glassy state which would cause stress in the product leading to crack formation, deformation or shrinkage of the food article. This is of particular relevance if the second water homogenization phase (WH2) is followed by a cooling phase where the product temperature is reduced and the product overall moisture remains fairly constant.

In a preferred embodiment, at least one micronutrient is added to the comminuted rice-based material during steps A) and or B). The micronutrient may be added in the form of solid particles, in the form of liquid droplets or in the form of solid particles or liquid droplets suspended in a carrier fluid. In particular, oil-soluble and/or water-soluble micronutrients such as vitamins and minerals may be added.

Similarly, at least one emulsifier or hydrocolloid may be added to the comminuted rice-based material during steps A) and or B). A hydrocolloid may also be added to the formed food article during the drying step D).

Preferably, the temperature of the rice-based food articles in the drying step D) is maintained between 50 and 120°C and more preferably between 60 and 100°C. At these temperatures, transition from the rubbery state to the glassy state of the rice-based food article occurs at moisture contents of less than about 15 wt.-%. More preferably, this temperature in maintained between 60 and 90°C. At these temperatures, the glass transition occurs at moisture levels of less than about 12 wt.-%. Also, at these temperatures, thermal damage to most micronutrients is limited. As a result, manufacturing loss of micronutrients is kept low. Besides, browning of the rice-based food articles is avoided at these temperatures.

During the water homogenization phase (WH) or tempering phase, there is no need for a net change in the overall water contents of the food articles. The change in total water content of the food articles should be kept low and preferably is less than about 10% of the initial water content of the food articles prior to the homogenization phase. Rather than changing the overall moisture level of a single food article, all food articles are given enough time for the existing overall moisture within one single food article to spread out evenly by diffusion throughout that food article. Preferably, the change in total water content during a water homogenization phase (WH) is less than 5%, more preferably less than 1% and ideally 0°, i.e. no change at all.

The water removal phase (WR) may be carried out on a belt conveyor and/or in a fluidized bed while exposing the food articles to a dry gas such as dry air.

The water homogenization phase (WH) may be carried out on a belt conveyor, in a fluidized bed, in a hopper or bin or in a rotating drum while limiting water exchange between the food articles and dry air or while exposing the food articles to a damp gas such as moist air or while spraying the food articles with fine water droplets.

Preferably and ideally, the water homogenization phase (WH) is carried out such that the total water content of the food articles remains unchanged, i.e. without any net exchange of water between the food articles and the surrounding air. In a batch process, this is achieved by exposing a batch of food products to the same air and temperature (i.e. the same "climate") as was use for the previous batch. This will result in a homogenization atmosphere that is in equilibrium with the food articles that are meant to undergo homogenization. In a continuous process, the air used for water homogenization is enclosed in a chamber and the food articles to be treated pass through that chamber. As a result, the air and temperature in the chamber will each reach a value which is in equilibrium with the food articles passing though the chamber. Thus, except for the start-up period of the process, the atmosphere in the chamber is the required equilibrium atmosphere that will not cause any change in the total water content of the food articles.

The entire water removal phase (WR) or the sum of all single water removal phases (WR1, WR2, etc.) may last 10 min to 4 h. Preferably, the first water removal phase is carried out for only 2 to 20 min at 70-90°C, while the second water removal phase is carried out for about 10 to 40 min at 70-90°C.

The water homogenization phase (WH) or the sum of all single water homogenization phases (WH1, WH2, etc.) may last 10 min to 4 h. Preferably, the first water homogenization phase is carried out for 10 min to 2 h at 60-80°C, while the second water homogenization phase is carried out for about 10 min to 2 h at 60-80°C. Preferably, sticking of the articles is avoided by keeping the articles within a fluidized bed and/or within a drum rotating about its horizontally aligned drum axis or a hopper modified in such way that the product is kept in constant flow.

Preferably, the initial water content of the rice-based food articles after step C) and prior to the drying step D) is 20-40 wt.-% and the final water content of the rice-based food articles after the drying step D) is 10-16 wt.-%, based on the total weight of the rice-based food articles.

In a preferred version of the process, during said first water removal phase (WR1) the water content of the rice-based food articles is reduced by 5-15 wt.-% and during said second water removal phase (WR2) the water content of the rice-based food articles is reduced by another 5-15 wt.-%, based on the total weight of the rice-based food articles. This step-wise reduction of the moisture content avoids large moisture gradients within the food articles during each water removal phase and thus prevents most of the volume of the food articles from becoming glassy during most of the overall drying step D). As a result, mechanical stress within the food articles is kept at a low level.

In a further preferred version, the rice-based food articles have a shape similar to natural rice kernels. This allows broken rice to be upgraded and is especially preferred if a micronutrient is added to the comminuted rice-based material during steps A) and or B). Such reconstituted rice kernels may be provided with a high concentration of micronutrients (fortified rice kernels) and may be mixed with normal (natural) rice kernels to provide a mixture of natural and fortified rice kernels.

Preferably, the hydrothermal-mechanical treatment of the comminuted rice-based material in step B) is carried out by exposing the comminuted rice-based material from step
A) to a hot and damp medium in the presence of water and/or vapor, and mixing the comminuted rice-based material while exposing it to shear.

The drying step (D) may comprise several (n) water removal phases in each of which water is removed from the food articles and several (m) water homogenization phases in each of which the water concentration within the food articles is homogenized. Preferably, the process comprises alternating water removal and water homogenization phases. This allows gentle/mild drying in the rubbery state throughout most of the drying step (D). Thus, only very thin food product surfaces in the glassy state exist during a very short period of time.

In a preferred version, the drying step (D) comprises more than two water removal phases (n > 2) and/or more than two water homogenization phases (m > 2).

Advantageously, during each water removal phase the water content of the rice-based food articles is reduced by only 2-10 wt.-% based on the total weight of the rice-based food articles.

In a further preferred version, the number of water removal phases and the number of water homogenization phases during the drying step (D) is selected as a function of the initial water content of the rice-based food articles prior to the drying step (D). If, for some reason, the initial water content is higher than expected, an additional water removal and water homogenization phase may be added, as required. Thus, the drop in water content per water removal phase can be kept below 10 wt.-%, preferably below 5 wt.-% based on the total weight of the rice-based food articles.

Preferably, the individual phases of the drying step (D), i.e. the at least one water removal phase (WR1, WR2, ..., WRn) and the at least one water homogenization phase (WH1, WH2, ..., WHm), are carried out continuously. In particular, the individual phases of the drying step (D), i.e. the at least one water removal phase (WR1, WR2, ..., WRn) and the at least one water homogenization phase (WH1, WH2, ..., WHm), are carried out alternately. This allows "mild drying" of the food articles by removing a limited amount of water during each water removal phase and re-equilibrating the water distribution within each food article. As a result, moisture gradients and glassy regions within the food articles are avoided or kept at a minimum, thus reducing the risk of stress-induced damages to the dried food articles.

According to a particularly advantageous version, between two water removal phases (WRn and WRn+1), the food articles undergo a water homogenization phase (WHm) by being passed through a chamber filled with an atmosphere of air and water vapor which atmosphere is in equilibrium with the food articles being passed there through. Preferably, the atmosphere in the chamber is isolated from the ambient atmosphere. Thus, there is hardly any exchange of moisture or energy between the chamber and the ambient atmosphere. As a result, during a continuous process, steady state conditions are established and the food articles passing through the chamber are in moisture and temperature equilibrium with the chamber atmosphere. As a result, any water exchange between the food articles and the surrounding atmosphere in the chamber is limited to less than 2% of the initial water content of the food articles prior to entering the chamber.

The food articles may be individualized and prevented from contacting each other while passing through the chamber. For instance, the food articles passing through the chamber may be kept at a constant distance from each other while being transported through the chamber by a moving carrier means. Such carrier means could be a conveyor belt, preferably sieve-bottom-type conveyor belt. As an alternative, all of the food articles passing through the chamber may be moved randomly by fluidization while being transported through the chamber by a moving carrier means. Such carrier means may be a turbulent moist air stream having a drift motion component and a random motion component, preferably a rotating drum-type chamber.

The present invention will now be described in greater detail by referring to the accompanying drawings.
- Fig. 1: is a diagram which shows the glass transition temperature Tg as a function of moisture content MC as well as several numbered dots in this diagram indicating successive conditions of the rice-based food article during the drying step D); and
- Fig. 2: is a diagram showing two different drying curves illustrating a water removal phase of the drying step D)

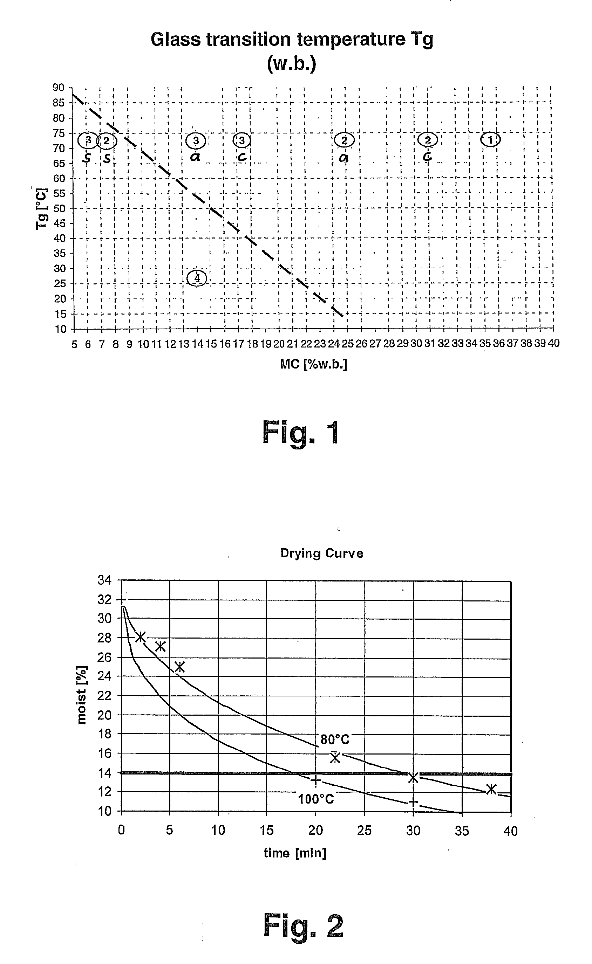

The phase diagram of Fig. 1 shows successive conditions (temperature/moisture-pairs) of a reconstituted rice kernel or fortified rice kernel as an example of a rice-based food article during the drying step D). The dashed line indicates the glass transition curve in this phase diagram of a rice-based material with the rubbery state in the upper right region and the glassy state in the lower left region.
(1) indicates the condition of a reconstituted/fortified rice-based piece immediately after the forming step C) which may be an extrusion step where the at least partially gelatinized rice-based material from step B) is extruded into strands through a die plate and cut into individual rice-based pieces having a shape and size similar to natural rice kernels.
   → temperature: 70°C / moisture content: 31 wt.-%
(2c) indicates the condition in the center of the rice-based piece after the first water removal phase WR1 during the drying step D).
   → temperature: 70°C / moisture content: 28 wt.-% (rubbery)
(2s) indicates the condition at the surface of the rice-based piece after the first water removal phase WR1 during the drying step D).
   → temperature: 70°C / moisture content: 7.5 wt.-% (glassy)
(2a) indicates the averaged (equilibrated) condition of (and throughout) the rice-based piece after the first water homogenization phase WH1 of the drying step D).
   → temperature: 70°C / moisture content: 25 wt.-% (rubbery)
(3c) indicates the condition in the center of the rice-based piece after the second water removal phase WR2 during the drying step D).
   → temperature: 70°C / moisture content: 17.5 wt.-% (rubbery)
(3s) indicates the condition at the surface of the rice-based piece after the second water removal phase WR2 during the drying step D).
   → temperature: 70°C / moisture content: 6.2 wt.-% (glassy)
(3a) indicates the averaged (equilibrated) condition of (and throughout) the rice-based piece after the second water homogenization phase WR2 of the drying step D).
   → temperature: 70°C / moisture content: 14 wt.-% (rubbery)
(4) indicates the condition of the reconstituted/fortified rice-based piece after a cooling phase at the end of the drying step D).
   → temperature: 25°C / moisture content: 14 wt.-% (glassy)

From (1) through (4) it can be seen that during the entire drying step D) the rice-based pieces reside in the glassy state only twice (2s, 3s) and only partially, i.e. only in the surface region while most of the bulk of the rice-based pieces remain in the rubbery state.

After each water removal phase (WR1 and WR2) the corresponding water homogenization phase (WH1 and WH2, respectively) brings the regions with the interim glassy state (2s, 3s) within the rice-based pieces back to the rubbery state (2a and 3a, respectively).

The interim glassy states (2s, 3s) exist at a thin surface layer of the rice-based pieces and for a short period only. Thus, there is not enough stress caused for crack formation in the rice-based pieces.

During each water homogenization phase (WH1 and WH2), water from the relatively moist rubbery regions (2c, 3c) diffuses (back) into the relatively dry glassy regions (3s, 3s). As a result, the entire rice-based pieces revert to the rubbery state (2a, 3a).

It should be noted that in all conditions (1) to (3a), the temperature of the rice-based pieces remains constant at 70°C. This means that the conditioning environment for all phases WR1, WH1, WR2 and WH1 of the drying step D) may be kept at the same temperature. Preferably, the temperature during the water removal phases (WR1, WR2) is slightly above the temperature during the water homogenization phases (WH1, WH2). This reduces the time required for removing a certain amount of water from the food product. As a result, the overall process duration is reduced.

The diagram of Fig. 2 shows two different drying curves each illustrating a possible water removal phase WR1 or WR2 of the drying step D).

The first drying curve shows the moisture content as a function of time when drying is carried out at 80°C. The target moisture level of 14 wt.-% is achieved after 30 min of drying.

The second drying curve shows the moisture content as a function of time when drying is carried out at 100°C. The target moisture level of 14 wt.-% is achieved after 18 min of drying.

## Claims

1. A process for manufacturing rice-based food articles, comprising the steps of:
(A) comminuting rice and/or broken rice to obtain a comminuted rice-based material;
(B) hydrothermally-mechanically treating the comminuted rice-based material until a rice-based matrix material is obtained by at least partial gelatinization of the comminuted rice-based material;
(C) forming the at least partially gelatinized rice-based matrix material by pressing and portioning in order to obtain rice-based food articles; and
(D) drying the rice-based food articles,
**characterized in that** the drying step (D) comprises:
➢ a water removal phase (WR) where water is removed from the food articles; and
➢ a water homogenization phase (WH) where the water concentration within the food articles is homogenized.

2. A process according to claim 1, **characterized in that** the process comprises a first water removal phase (WR1); a second water removal phase (WR2); and a water homogenization phase (WH1) between said first and second water removal phases (WR1 and WR2).

3. A process according to claim 2, **characterized in that** the process comprises a first water homogenization phase (WH1) between said first and second water removal phases (WR1 and WR2); and a second water homogenization phase (WH2) after said second water removal phase (WR2).

4. A process according to any one of claims 1-3, **characterized in that** at least one micronutrient is added to the comminuted rice-based material during steps A) and or B).

5. A process according to claim 4, **characterized in that** at least one emulsifier is added to the comminuted rice-based material during steps A) and or B).

6. A process according to any one of claims 1-5, **characterized in that** the temperature of the rice-based food articles in the drying step D) is maintained between 50 and 120°C.

7. A process according to any one of claims 1-6, **characterized in that** during the water homogenization phase (WH) the change in total water content of the food articles is less than 10% of the initial water content of the food articles prior to the homogenization phase.

8. A process according to any one of claims 1-7, **characterized in that** the water removal phase (WR) is carried out on a belt conveyor and/or in a fluidized bed.

9. A process according to any one of claims 1-8, **characterized in that** the water homogenization phase (WH) is carried out on a belt conveyor, in a fluidized bed, in a rotating drum or in a hopper.

10. A process according to any one of claims 1-9, **characterized in that** the water removal phase (WR) is carried out for 10 min to 4 h.

11. A process according to any one of claims 1-10, **characterized in that** the water homogenization phase (WH) is carried out for 10 min to 4 h.

12. A process according to any one of claims 1-11, **characterized in that** the initial water content of the rice-based food articles prior to the drying step D) is 20-40 wt.-% and the final water content of the rice-based food articles after the drying step D) is 10-16 wt.-%, based on the total weight of the rice-based food articles.

13. A process according to any one of claims 1-12, **characterized in that** during said first water removal phase (WR1) the water content of the rice-based food articles is reduced by 5-15 wt.-% and during said second water removal phase (WR2) the water content of the rice-based food articles is reduced by another 5-15 wt.-%, based on the total weight of the rice-based food articles.

14. A process according to any one of claims 1-13, **characterized in that** the rice-based food articles have a shape similar to natural rice kernels.

15. A process according to any one of claims 1-14, **characterized in that** the hydrothermal-mechanical treatment of the comminuted rice-based material in step B) is carried out by exposing the comminuted rice-based material from step A) to a hot and damp medium in the presence of water and/or vapor, and mixing the comminuted rice-based material while exposing it to shear.

16. A process according to claim 1, **characterized in that** the drying step (D) comprises:
➢ several (n) water removal phases (WR1, WR2, ..., WRn) in each of which water is removed from the food articles; and
➢ several (m) water homogenization phases (WH1, WH2, ..., WHm) in each of which the water concentration within the food articles is homogenized.

17. A process according to claim 16, **characterized in that** it comprises alternating water removal and water homogenization phases.

18. A process according to any one of claims 16 and 17, **characterized in that** n > 2 and/or m > 2.

19. A process according to any one of claims 16-18, **characterized in that** during each water removal phase (WR1, WR2, ..., WRn) the water content of the rice-based food articles is reduced by 2-10 wt.-% based on the total weight of the rice-based food articles.

20. A process according to any one of claims 16-19, **characterized in that** the number of water removal phases and the number of water homogenization phases during the drying step (D) is selected as a function of the initial water content of the rice-based food articles prior to the drying step D).

21. A process according to any one of claims 1-20, **characterized in that** the individual phases of the drying step (D), i.e. the at least one water removal phase (WR1, WR2, ..., WRn) and the at least one water homogenization phase (WH1, WH2, ..., WHm), are carried out continuously.

22. A process according to claim 21, **characterized in that** the individual phases of the drying step (D), i.e. the at least one water removal phase (WR1, WR2, ..., WRn) and the at least one water homogenization phase (WH1, WH2, ..., WHm), are carried out alternately.

23. A process according to any one of claims 21 and 22, **characterized in that** between two water removal phases (WRn and WRn+1), the food articles undergo a water homogenization phase (WHm) by being passed through a chamber filled with an atmosphere of air and water vapor which atmosphere is in equilibrium with the food articles being passed there through.

24. A process according to claim 23, **characterized in that** the atmosphere in the chamber is isolated from the ambient atmosphere.

25. A process according to any one of claims 23 and 24, **characterized in that** the food articles are individualized and prevented from contacting each other while passing through the chamber.

26. A process according to claim 25, **characterized in that** the food articles passing through the chamber are kept at a constant distance from each other while being transported through the chamber by a moving carrier means.

27. A process according to any one of claims 25 and 26, **characterized in that** all of the food articles passing through the chamber are moved randomly by fluidization while being transported through the chamber by a moving carrier means.
